# EUROPEAN PATENT APPLICATION

(11) **EP 0 827 315 A2**
(43) Date of publication of application: **04.03.1998**
(21) Application number: 97114083.5
(22) Date of filing: 14.08.1997
(51) Int. Cl.: H04M 1/72, H04Q 7/32

(54) **Cellular phone with facsimile function**

(30) Priority: 27.08.1996 JP 225454/96
(71) Applicant: MATSUSHITA ELECTRIC INDUSTRIAL CO., LTD., Kadoma-shi, Osaka-fu 571 (JP)
(72) Inventor: Mizukami, Junichi, Kawasaki-shi, Kanagawa 216 (JP); Fukuda, Hideyuki, Machida-shi, Tokyo 194 (JP)
(74) Representative: Grünecker, Kinkeldey, Stockmair & Schwanhäusser Anwaltssozietät

(57) **Abstract**

In a cellular phone, at the time of signal reception in facsimile communication, data received by a receiver is subjected to baseband processing by a baseband processing section, and then the data is converted into image data in a data processing section so as to be displayed in the display section. Further, the data inputted through an input section is displayed in the display section through a CPU and at the time of transmission of the image, the image data which is being displayed is converted by a data processing section through the CPU into data for facsimile communication, and then converted into transmission data in the baseband processing section, the transmission data being transferred to a transmitter.

## Description

### BACKGROUND OF THE INVENTION

### 1. Field of the Invention

The present invention relates to a cellular phone by which facsimile communication can be carried out without connecting any other device.

### 2. Description of the Related Art

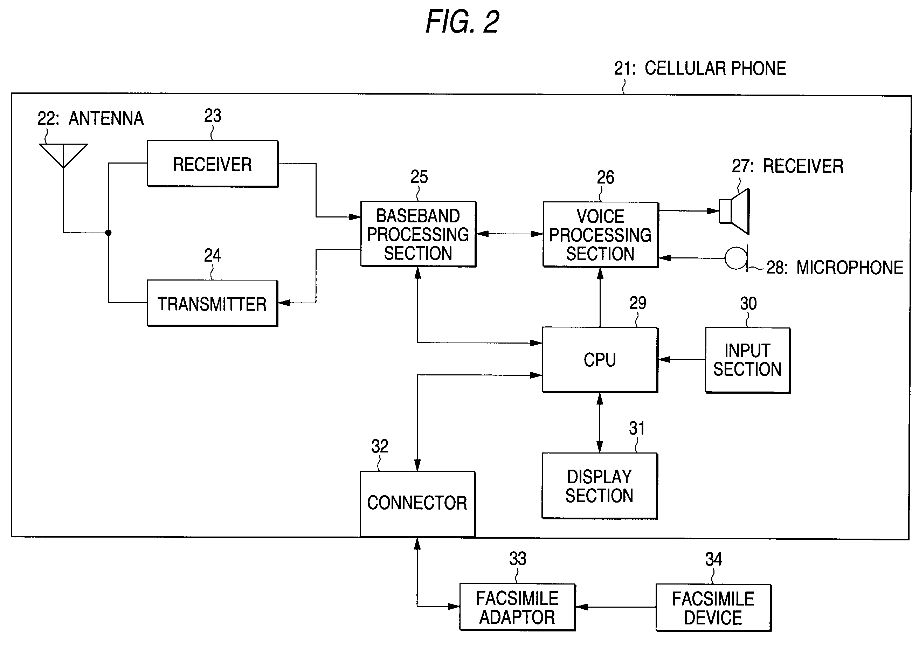

Conventionally, facsimile communication by means of a cellular phone is carried out through a facsimile modem and a facsimile equipment which are connected to the cellular phone. Fig. 2 shows a configuration of such a conventional cellular phone. In Fig. 2, a cellular phone 21 is constituted by an antenna 22, a transmitter 23, a receiver 24, a baseband processing section 25, a voice processing section 26, a receiver 27, a microphone 28, a CPU 29, an input section 30, a display section 31, and a connector 32. In order to carry out facsimile communication by means of such a cellular phone 21, a facsimile equipment 34 is connected through a facsimile adapter 33 to the connector 32 of the cellular phone 21. At the time of signal reception, data received by the transmitter 23 is transferred to the facsimile equipment 34 through the baseband processing section 25, the CPU 29, the connector 32, and the facsimile adapter 33 so that the facsimile equipment 34 outputs the signal as an image. At the time of signal transmission, on the other hand, an image is read by the facsimile equipment 34, transferred to the connector 32 through the facsimile adapter 33, converted in the baseband processing section 25, and then transmitted from the transmitter 24.

In such a conventional configuration, however, the facsimile adapter 33 and facsimile equipment 34 are required in addition to the cellular phone 21. In addition, the image data of the facsimile communication cannot be seen unless the facsimile adapter 33 and facsimile equipment 34 are connected to the cellular phone 21 through the connector 32.

### SUMMARY OF THE INVENTION

It is an object to provide a cellular phone by which image data transmitted/received through facsimile communication can be seen in a display section of the cellular phone without connecting such a facsimile adapter and such a facsimile equipment to the cellular phone.

In order to achieve the above object, according to the present invention, in a cellular phone, there is provided a data processing section so that an image transmitted/received by facsimile communication can be seen in a display section of the cellular phone.

Accordingly, the cellular phone can carry out facsimile communication without requiring connection of any other devices to the cellular phone.

### BRIEF DESCRIPTION OF THE DRAWINGS

In the accompanying drawings:
Fig. 1 is a schematic block diagram showing the configuration of an embodiment of the cellular phone with a facsimile function according to the present invention; and
Fig. 2 is a schematic block diagram showing the configuration of a conventional cellular phone with a facsimile function.

### DETAILED DESCRIPTION OF THE INVENTION

Detailed description of the present invention will be described as follows referring to the accompanying drawings.

A cellular phone with a facsimile function according to the present invention has a data processing section for performing exchange of transmission/reception data and image data in facsimile communication, and a display section for displaying facsimile data to be transmitted/received as an image. In the cellular phone has functions, data to be transmitted/received by facsimile communication is converted into image data in the inside of the cellular phone so as to be displayed in the display section so that the image can be confirmed on the display section and facsimile communication can be carried out only by the cellular phone.

In the above cellular phone with a facsimile function, preferably, there is provided an RS232C connector for enabling data input/output to/from said data processing section by connection of an external device to the RS232C connector. Also data input/output to/from an external device can be carried out through the RS232C connector, and data transmission/reception by using any other suitable external device can be carried out.

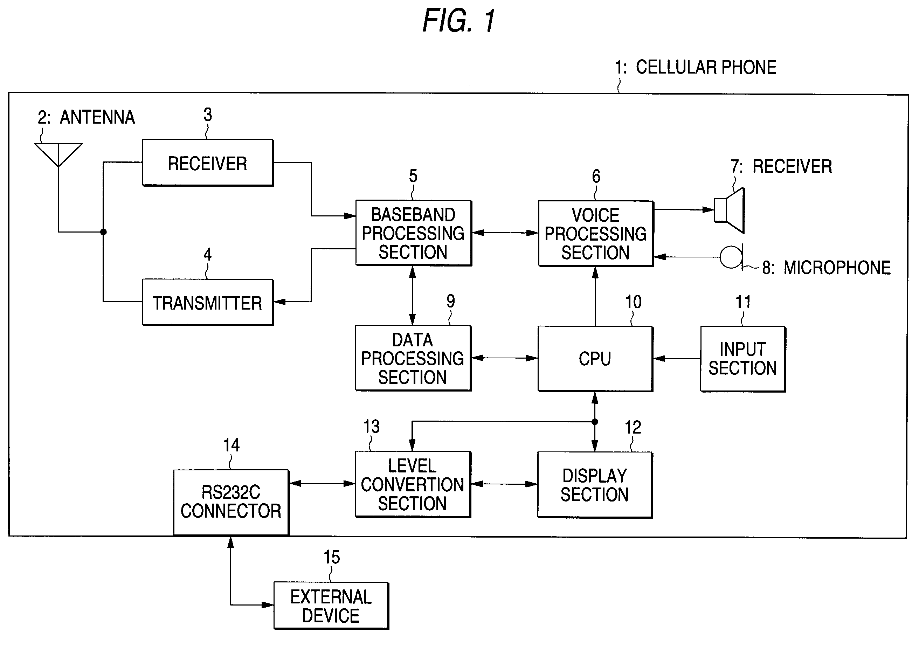

Fig. 1 is a block diagram showing the configuration of a cellular phone with a facsimile function according to an embodiment of the present invention. In Fig. 1, a cellular phone 1 is constituted by an antenna 2, a receiver 3, a transmitter 4, a baseband processing section 5, a voice processing section 6, a receiver 7, a microphone 8, a data processing section 9, a CPU 10, an input section 11, a display section 12, a level conversion section 13, and an RS232C connector 14. An external device 15 may be connected to the RS232C connector. The data processing section 9 is interposed between the baseband processing section 5 and the CPU 10 to carry out conversion between image data and data to be transmitted/received by facsimile communication. The level conversion section 13 and the RS232C connector 14 are provided to make it possible to carry out image data input/output by means of the external device 15. The level conversion section 13 is connected to the CPU 10 and the display section 12.

In the thus configured cellular phone, the operation of the cellular phone will be described below. At the time of signal reception by facsimile communication, the data received by the receiver 3 through the antenna 2 is subjected to baseband processing by the baseband processing section 5 and then converted into image data by the data processing section 9. The image data is displayed in the display section 12 so that the reception image in facsimile communication can be seen. At the time of signal transmission, on the other hand, image data inputted through the input section 11 is displayed in the display section 12 through the CPU 10. At the same time, the image data is converted by the data processing section 9 into data for facsimile communication. The data for facsimile communication is converted into transmission data in the baseband processing section 5 and outputted from the transmitter 4 via the antenna 2.

In the case where any other external device 15 is connected to the RS232C connector 14, the data input/output can be carried out also through the external device 15. That is, the image data outputted from the data processing section 9 is transferred to the external device 15 through the CPU 10, the level conversion section 13 and the RS232C connector 14 so that the image data may be displayed in a display section of the external device 15 and/or stored in a memory of the external device 15. Further, at the time of signal transmission, data inputted by means of a scanner or the like of the external device 15 is transferred to the data processing section 9 through the RS232C connector 14, the level conversion section 13 and the CPU 10. The data is then subjected to data processing in the data processing section 9, and transmitted from the transmitter 4 through the baseband processing section 5.

As described above, in this embodiment of the present invention, the data processing section 9 is provided in the cellular phone 1 to perform conversion between transmission/reception data and image data, so that an image of facsimile data can be seen in the display section 12 and facsimile communication can be carried out without connecting any other external devices to the cellular phone. Further, if an external device 15 is connected to the RS232C connector 14, data input/output can be carried out by means of the external device 15 and data transmission/reception can be carried out by use of the external device 15.

As described above, the present invention has effects that by provision of a data processing section in a cellular phone, an image transmitted/received by facsimile communication can be seen in a display section of the cellular phone and facsimile communication can be carried out by the cellular phone without connecting any other external device.

## Claims

1. A cellular phone comprising:
data processing means for performing conversion between transmission/reception data and image data to in facsimile communication; and
display means for displaying said transmission/reception data as images.

2. A cellular phone according to claim 1, further comprising connecting means to which an external device is connected, for enabling input/output of data to/from said data processing section.

3. A cellular phone according to claim 2, wherein said connecting means is an RS232C connector.

4. A cellular phone according to claim 1, further comprising:
data receiving means for receiving reception data;
data transmitting means for transmitting transmission data;
base band processing means for subjecting base band process to said transmission/reception data; and
input means for inputting said transmission data.
